(19) Europäisches Patentamt
European Patent Office
Office européen des brevets

(11) EP 4 779 743 A1

(12) EUROPEAN PATENT APPLICATION
published in accordance with Art. 153(4) EPC

(43) Date of publication:
22.07.2026 Bulletin 2026/30

(21) Application number: 24878899.4

(22) Date of filing: 11.10.2024

(51) International Patent Classification (IPC):
*H01M 10/0567* (2010.01) *H01M 10/0525* (2010.01)

(52) Cooperative Patent Classification (CPC):
H01M 10/0567; H01M 4/505; H01M 4/525; H01M 4/5825; H01M 10/0525; H01M 10/0569; Y02E 60/10

(86) International application number:
PCT/CN2024/124101

(87) International publication number:
WO 2025/082255 (24.04.2025 Gazette 2025/17)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 16.10.2023 CN 202311341961

(71) Applicants:
- Guangzhou Tinci Materials Technology Co., Ltd.
  Guangzhou, Guangdong 510760 (CN)
- Jiujiang Tinci Materials Technology Co., Ltd.
  Jiujiang, Jiangxi 332000 (CN)

(72) Inventors:
- LU, Jiasheng
  Guangzhou, Guangdong 510670 (CN)
- FAN, Weizhen
  Guangzhou, Guangdong 510670 (CN)
- SHI, Litao
  Guangzhou, Guangdong 510670 (CN)

(74) Representative: Studio Torta S.p.A.
Via Viotti, 9
10121 Torino (IT)

# (54) ELECTROLYTE ADDITIVE, ELECTROLYTE, BATTERY AND ELECTRIC DEVICE

(57) The present disclosure discloses an electrolyte additive, an electrolyte, a battery, and an electrical device. The electrolyte additive includes a compound represented by Formula 1 and a protective agent,

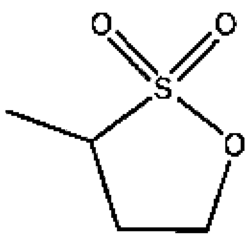

Formula 1

The protective agent includes a chain compound with a degree of unsaturation greater than or equal to 3 and is capable of undergoing an addition reaction with a sulfonic ester group-containing free radical formed after a ring-opening reaction of the compound represented by Formula 1.

EP 4 779 743 A1

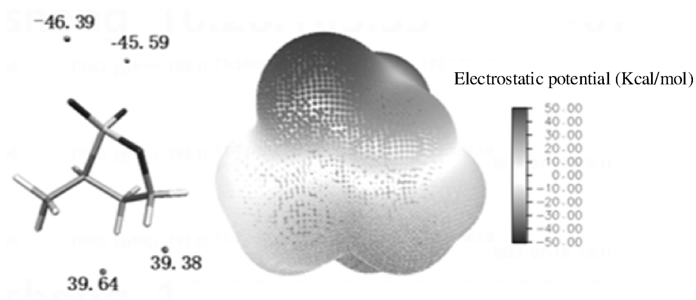
-46. 39
-45. 59
39. 38
39. 64
Electrostatic potential (Kcal/mol)
50.00
40.00
30.00
20.00
10.00
0.00
-10.00
-20.00
-30.00
-40.00
-50.00

FIG. 1

## Description

This application claims priority to Chinese Patent Application No. 202311341961.4, filed with China National Intellectual Property Administration on October 16, 2023 and entitled "ELECTROLYTE ADDITIVE, ELECTROLYTE, BATTERY, AND ELECTRICAL DEVICE", the entire contents of which are incorporated herein by reference.

## FIELD

The present disclosure relates to the field of batteries, and in particular, to an electrolyte additive, an electrolyte, a battery, and an electrical device.

## BACKGROUND

At present, commercial electrolytes are typically prepared by dissolving a lithium salt in a linear/cyclic carbonate solvent. For example, ethylene carbonate (EC), diethyl carbonate (DEC), and ethyl methyl carbonate (EMC) are commonly used. These carbonate solvents can not only determine the physical properties of the electrolyte, but also participates in the formation of a solid electrolyte interphase (SEI) film at the negative electrode-electrolyte interface to ensure the cycling stability of the battery. However, the SEI film formed by the decomposition of the solvents exhibits poor thermal stability, which results in aggravated side reactions of the electrolyte under high-temperature conditions, leading to gas generation and other issues. Consequently, lithium-ion batteries often suffer from negative effects such as swelling and rapid capacity reduction under high-temperature conditions. In the case that the SEI film formed by carbonate solvents has a limited protective capability for the negative electrode-electrolyte interface, cyclic sulfonate additives has attracted widespread attention in the fields of both electronic products and power batteries. This is because such cyclic sulfonate additives can form a stable SEI film enriched with lithium alkyl sulfonates and inorganic sulfides, which can inhibit gas generation of the battery under high-temperature conditions.

In terms of improving performance of the lithium battery, 1,3-propane sultone (PS) is a representative sulfonate additive, and has demonstrated excellent performance in improving both the high-temperature cycling performance and high-temperature storage performance of the battery. However, PS is regulated under the European Union REACH framework, which restricts its addition amount to no more than 0.8% of the total mass of the electrolyte. However, the addition amount of PS in the electrolyte generally needs to be ≥1% to satisfy application requirements. Therefore, it is necessary to provide an electrolyte additive capable of simultaneously improving the high-temperature cycling performance and the high-temperature storage performance of the battery.

## SUMMARY

The present disclosure aims to at least solve one of the technical problems in the related art to some extent. To this end, an objective of the present disclosure is to provide an electrolyte additive, an electrolyte, a battery, and an electrical device. By adding the electrolyte additive to a lithium-ion battery, high-temperature cycling performance and high-temperature storage performance of the battery can be improved.

A first aspect of the present disclosure provides an electrolyte additive, including a compound represented by Formula 1 and a protective agent,

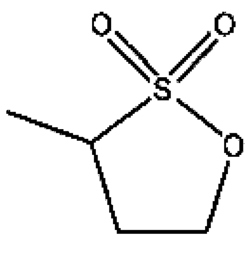

Formula 1

,

in which the protective agent includes a chain compound with a degree of unsaturation greater than or equal to 3 and is capable of undergoing an addition reaction with a sulfonic ester group-containing free radical formed after a ring-opening reaction of the compound represented by Formula 1.

The electrolyte additive of the present disclosure includes the compound represented by Formula 1 and the protective agent. By adding the electrolyte additive to the lithium-ion battery, during formation and cycling processes, the

compound represented by Formula 1 undergoes a ring-opening reaction to generate the sulfonic ester group-containing free radical. The protective agent of the present disclosure includes a chain compound with a degree of unsaturation greater than or equal to 3, which has high activity and is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery. Therefore, by adding the electrolyte additive to the lithium-ion battery, the power performance, the high-temperature cycling performance, and the high-temperature storage performance of the battery can be improved.

In some embodiments, the protective agent includes a chain compound with a degree of unsaturation ranging from 3 to 8. Therefore, the power performance, the high-temperature cycling performance, and the high-temperature storage performance of the battery can be improved.

In some embodiments, a mass ratio of the compound represented by Formula 1 to the protective agent ranges from 0.7:1 to 11:1. Therefore, the power performance, the high-temperature cycling performance, and the high-temperature storage performance of the battery can be improved.

In some embodiments, the chain compound with a degree of unsaturation greater than or equal to 3 includes at least one of a silane compound, a carbonate compound, or a sulfonate compound Therefore, the power performance, the high-temperature cycling performance, and the high-temperature storage performance of the battery can be improved.

In some embodiments, the silane compound includes a compound represented by Formula 2,

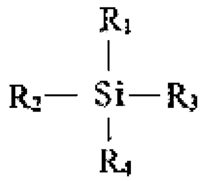

Formula 2 ,

in which $R_1$, $R_2$, $R_3$, and $R_4$ are each independently selected from the group consisting of hydrogen, fluorine, alkyl having 1 to 10 carbon atoms, silyl having 1 to 10 carbon atoms, siloxy having 1 to 10 carbon atoms, alkenyl having 2 to 10 carbon atoms, alkynyl having 2 to 10 carbon atoms, alkenylsiloxy having 2 to 10 carbon atoms, and alkynylsiloxy having 2 to 10 carbon atoms. Therefore, the power performance, the high-temperature cycling performance, and the high-temperature storage performance of the battery can be improved.

In some embodiments, in Formula 2, $R_1$, $R_2$, $R_3$, and $R_4$ are each independently selected from the group consisting of methyl, vinyl, ethynyl, ethynyldimethylsiloxy, and trivinylsiloxy. Therefore, the power performance, the high-temperature cycling performance, and the high-temperature storage performance of the battery can be improved.

In some embodiments, the silane compound includes at least one of the following compounds:

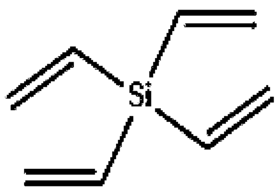

Formula 2-1 ,

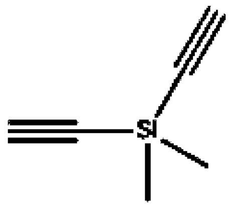

Formula 2-2 ,

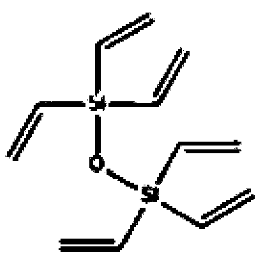

Formula 2-3 ,

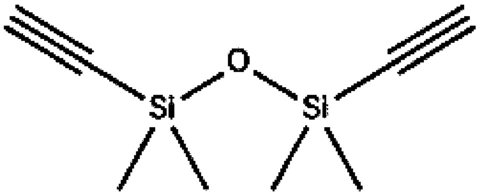

Formula 2-4 , or

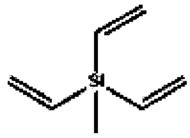

Formula 2-5 .

Therefore, the power performance, the high-temperature cycling performance, and the high-temperature storage performance of the battery can be improved.

In some embodiments, the carbonate compound includes a compound represented by Formula 3,

$$R_5—A—R_6$$

Formula 3 ,

in which A is alkenyl having 2 to 6 carbon atoms or alkynyl having 2 to 6 carbon atoms; and $R_5$ and $R_6$ are each independently selected from the group consisting of hydrogen, fluorine, alkyl having 1 to 10 carbon atoms, alkenyl having 2 to 10 carbon atoms, alkynyl having 2 to 10 carbon atoms, an alkyl carbonate group having 2 to 10 carbon atoms, an alkyl sulfonate group having 1 to 10 carbon atoms, and fluoroalkyl having 1 to 10 carbon atoms, provided that at least one of $R_5$ and $R_6$ is an alkyl carbonate group having 2 to 10 carbon atoms. Therefore, the power performance, the high-temperature cycling performance, and the high-temperature storage performance of the battery can be improved.

In some embodiments, in Formula 3, $R_5$ and $R_6$ are each an alkyl carbonate group having 1 to 10 carbon atoms, preferably diethyl carbonate groups. Therefore, the power performance, the high-temperature cycling performance, and the high-temperature storage performance of the battery can be improved.

In some embodiments, the carbonate compound includes at least one of the following compounds:

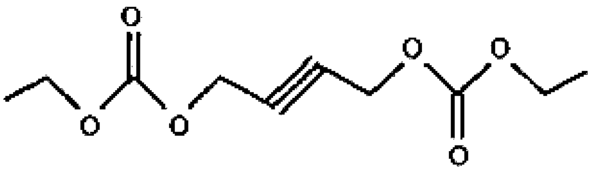

Formula 3-1 , or

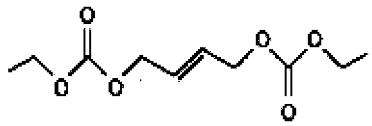

Formula 3-2 .

Therefore, the power performance, the high-temperature cycling performance, and the high-temperature storage performance of the battery can be improved.

In some embodiments, the sulfonate compound includes a compound represented by Formula 4:

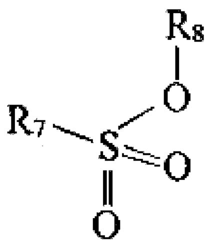

Formula 4 ,

in which $R_7$ and $R_8$ are each independently selected from the group consisting of a hydrogen atom, a fluorine atom, alkyl having 1 to 10 carbon atoms, fluoroalkyl having 1 to 10 carbon atoms, alkenyl having 2 to 10 carbon atoms, and alkynyl having 2 to 10 carbon atoms. Therefore, the power performance, the high-temperature cycling performance, and the high-temperature storage performance of the battery can be improved.

In some embodiments, in Formula 4, $R_7$ and $R_8$ are each independently selected from the group consisting of methyl, trifluoromethyl, ethynyl, vinyl, and a fluorine atom. Therefore, the power performance, the high-temperature cycling performance, and the high-temperature storage performance of the battery can be improved.

In some embodiments, the sulfonate compound includes at least one of the following compounds:

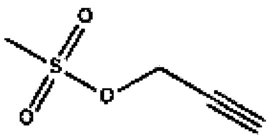

Formula 4-1 ,

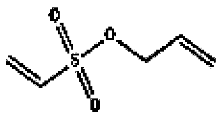

Formula 4-2 , or

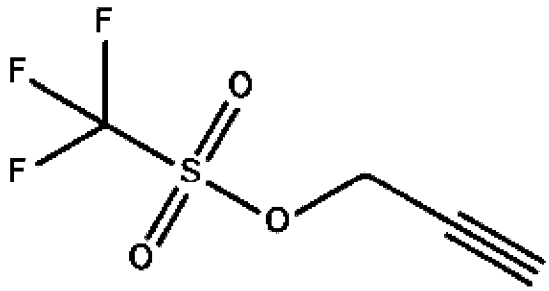

Formula 4-3 .

Therefore, the power performance, the high-temperature cycling performance, and the high-temperature storage performance of the battery can be improved.

A second aspect of the present disclosure provides an electrolyte, including the electrolyte additive as described in the first aspect. Therefore, by adding the electrolyte to the lithium-ion battery, the power performance, the high-temperature cycling performance, and the high-temperature storage performance of the battery can be improved.

In some embodiments, based on a total mass of the electrolyte, a mass proportion of the compound represented by Formula 1 ranges from 0.3% to 4%. Therefore, by adding the electrolyte to the lithium-ion battery, the power performance, the high-temperature cycling performance, and the high-temperature storage performance of the battery can be improved.

In some embodiments, the electrolyte further includes a solvent, and the solvent includes a cyclic solvent.

In some embodiments, the cyclic solvent includes at least one of butylene carbonate, ethylene carbonate, fluoroethylene carbonate, propylene carbonate, or 1,4-butyrolactone.

In some embodiments, based on the total mass of the electrolyte, a mass proportion of the cyclic solvent ranges from 10% to 30%.

A third aspect of the present disclosure provides a battery, including the electrolyte as described in the second aspect. Therefore, the battery has excellent power performance, high-temperature cycling performance, and high-temperature storage performance.

In some embodiments, the battery further includes a positive electrode active material. The positive electrode active material includes at least one of $LiCoO_2$, $LiMn_2O_4$, $Li_{1+y}Mn_{1-x}M_xO_2$, $LiFe_{1-x}M_xPO_4$, or $Li_2Mn_{1-x}O_4$, M includes at least one of Ni, Co, Mn, Al, Cr, Mg, Zr, Mo, V, or Ti, $0 \leq y \leq 0.2$, and $0 \leq x < 1$.

In some embodiments, the positive electrode active material includes at least one of $LiCoO_2$ or $Li_{1+y}Mn_{1-x}M_xO_2$, and M includes at least two of Ni, Co, Mn, Al, Cr, Mg, Zr, Mo, V, or Ti.

A fourth aspect of the present disclosure provides an electrical device, including the battery as described in the third aspect. Therefore, the electrical device has an excellent cycle life.

Additional aspects and advantages of the present disclosure will be provided in part in the following description, or will become apparent in part from the following description, or can be learned from practicing of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings.

FIG. 1 shows theoretically-calculated electrostatic potential of 2,4-BS (a compound represented by Formula 1).

## DETAILED DESCRIPTION

The embodiments of the present disclosure are described in detail below, and are intended to explain, rather than limiting, the present disclosure.

The technical solutions of the present disclosure are completed by the inventor(s) based on the following

findings. 2,4-BS (a compound represented by Formula 1), as a derivative of PS (1,3-propane sultone), can also form an SEI film enriched with lithium alkyl sulfonates and inorganic sulfides on the surface of the negative electrode during the formation and cycling processes when added to a battery. Therefore, 2,4-BS is often used as a substitute for PS to address the poor high-temperature performance of lithium-ion batteries. However, when a small amount of 2,4-BS is added, it is unable to participate in the repair process of the SEI film in the later stages of charge-discharge cycling, thereby failing to ensure the stability of the lithium-ion battery in later stages of charge-discharge cycling. Increasing the amount of 2,4-BS can indeed lead to the formation of a large quantity of sulfur-enriched SEI film, which enhances the stability of the negative electrode-electrolyte interface. Nevertheless, it has been observed that such an increase in 2,4-BS content results in significant gas generation during high-temperature storage of the battery. To investigate this phenomenon, the inventor(s) conducted in-depth research and theoretical calculations (electrostatic potential, as shown in FIG. 1). The results revealed that the electron cloud distribution of 2,4-BS is uneven that the charge amount of negative electron cloud is higher. This means that a sulfonate group-containing free radical formed after ring-opening of 2,4-BS is more inclined to donate electrons. Consequently, this free radical is prone to attack the cyclic solvent in an electrolyte, causing their decomposition to generate gases such as ethylene, carbon dioxide, and carbon monoxide, resulting in the gas generation of the battery.

In view of this, a first aspect of the present disclosure provides an electrolyte additive, including a compound represented by Formula 1 and a protective agent,

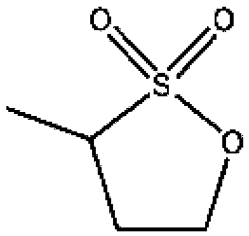

Formula 1

.

The protective agent includes a chain compound with a degree of unsaturation greater than or equal to 3 and is capable of undergoing an addition reaction with a sulfonic ester group-containing free radical formed after a ring-opening reaction of the compound represented by Formula 1.

The electrolyte additive of the present disclosure includes the compound represented by Formula 1 and the protective agent. By adding the electrolyte additive to the lithium-ion battery, during formation and cycling processes, the compound represented by Formula 1 undergoes a ring-opening reaction to generate the sulfonic ester group-containing free radical. The protective agent of the present disclosure includes a chain compound with a degree of unsaturation greater than or equal to 3, which has high activity and is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery. In addition, the protective agent used in the present disclosure is the chain compound. Compared with a cyclic compound, the protective agent of the chain compound of the present disclosure shows higher activity and is more prone to undergo the addition reaction with the sulfonic ester group-containing free radical generated by the ring-opening of the compound represented by Formula 1. Therefore, by adding the electrolyte additive to the lithium-ion battery, the power performance, the high-temperature cycling performance, and the high-temperature storage performance of the battery can be improved.

In the present disclosure, the degree of unsaturation of the protective agent = the number of double bonds in the protective agent + the number of triple bonds in the protective agent × 2. Moreover, since the "protective agent" preferentially reacts with the sulfonic ester group-containing free radical generated by the ring-opening reaction of the compound represented by Formula 1 over the cyclic solvent, it protects the cyclic solvent. Accordingly, it is referred to as a "protective agent".

In some embodiments of the present disclosure, the protective agent includes a chain compound with a degree of unsaturation ranging from 3 to 8. For example, the degree of unsaturation of the protective agent is 3, 4, 5, 6, 7, or 8. Thus,

the protective agent of the present disclosure has high activity and is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery. In addition, the protective agent with this degree of unsaturation can also reduce a problem of high battery impedance caused by too many unsaturated bonds participating in the formation of the SEI film.

In some embodiments of the present disclosure, a mass ratio of the compound represented by Formula 1 to the protective agent ranges from 0.7:1 to 11:1, such as 0.7:1, 0.9:1, 1:1, 3:1, 5:1, 7:1, 9:1, 11:1, or a range composed of any of the above values. Thus, by mixing the compound represented by Formula 1 and the protective agent according to the above mass ratio, the protective agent can fully combine with the sulfonic ester group-containing free radical generated by the ring-opening of the compound represented by Formula 1. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery.

In some embodiments of the present disclosure, the above chain compound with a degree of unsaturation greater than or equal to 3 is selected from the group consisting of a silane compound, a carbonate compound, a sulfonate compound, and a combination thereof.

In some embodiments of the present disclosure, the above silane compound includes a compound represented by Formula 2,

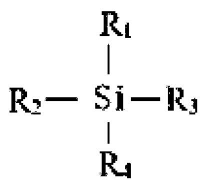

Formula 2 ,

in which $R_1$, $R_2$, $R_3$, and $R_4$ are each independently selected from the group consisting of hydrogen, fluorine, alkyl having 1 to 10 carbon atoms, silyl having 1 to 10 carbon atoms, siloxy having 1 to 10 carbon atoms, alkenyl having 2 to 10 carbon atoms, alkynyl having 2 to 10 carbon atoms, alkenylsiloxy having 2 to 10 carbon atoms, and alkynylsiloxy having 2 to 10 carbon atoms.

Thus, by using the silane compound with a degree of unsaturation greater than or equal to 3 of this composition, it is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery. In addition, the Si atoms on the SEI film readily combine with $F^-$, thereby reducing the content of HF in the electrolyte. This suppresses the erosion of the positive electrode by HF and thereby preventing the dissolution of transition metal ions into the electrolyte, which would otherwise catalyze the decomposition of cyclic solvents. Consequently, the SEI film formed in this manner enhances the stability of the cathode-electrolyte interface and inhibits gas generation.

As an example, the above alkyl group with 1 to 10 carbon atoms includes, but is not limited to methyl, ethyl, n-propyl, isopropyl, n-butyl, and the like. The silyl group with 1 to 10 carbon atoms includes, but is not limited to trimethylsilyl and the like. The siloxy group with 1 to 10 carbon atoms includes, but is not limited to dimethylsiloxy and the like. The alkenyl group with 2 to 10 carbon atoms includes, but is not limited to vinyl, propenyl, butadienyl, pentadienyl, and the like. The alkynyl group with 2 to 10 carbon atoms includes, but is not limited to ethynyl, propynyl, butynyl, and the like. The alkenylsiloxy group with 2 to 10 carbon atoms includes, but is not limited to trivinylsiloxy and the like. The alkynylsiloxy group with 2 to 10 carbon atoms includes, but is not limited to ethynyldimethylsiloxy and the like.

In some specific embodiments of the present disclosure, in the compound represented by Formula 2 as described above, $R_1$, $R_2$, $R_3$, and $R_4$ are each independently selected from the group consisting of methyl, vinyl, ethynyl, ethynyldimethylsiloxy, and trivinylsiloxy.

As an example, the silane compound includes at least one of the following compounds:

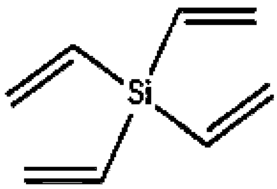
Formula 2-1 ,

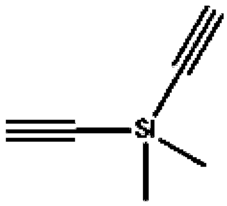
Formula 2-2 ,

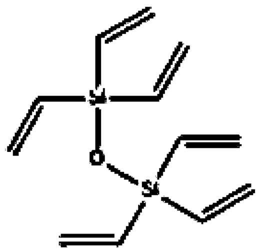
Formula 2-3 ,

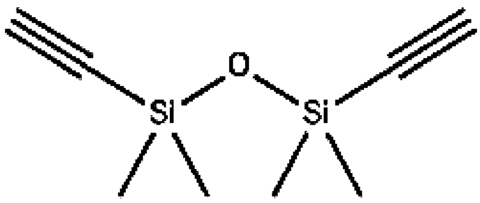
Formula 2-4 , or

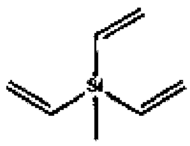
Formula 2-5 .

In some embodiments, the CAS number of the compound represented by Formula 2-1 is 1112-55-6; the CAS number of the compound represented by Formula 2-1 is 1675-60-1; the CAS number of the compound represented by Formula 2-3 is 75144-60-4; the CAS number of the compound represented by Formula 2-4 is 4180-02-3; the CAS number of the compound represented by Formula 2-5 is 18244-95-6.

In some specific embodiments of the present disclosure, the carbonate compound includes a compound represented by Formula 3,

$$R_5-A-R_6$$

Formula 3 ,

in which A is alkenyl having 2 to 6 carbon atoms or alkynyl having 2 to 6 carbon atoms; and $R_5$ and $R_6$ are each independently selected from the group consisting of hydrogen, fluorine, alkyl having 1 to 10 carbon atoms, alkenyl having 2 to 10 carbon atoms, alkynyl having 2 to 10 carbon atoms, an alkyl carbonate group having 2 to 10 carbon atoms, an alkyl sulfonate group having 1 to 10 carbon atoms, and fluoroalkyl having 1 to 10 carbon atoms, provided that at least one of $R_5$ and $R_6$ is an alkyl carbonate group having 2 to 10 carbon atoms.

Thus, by using the carbonate compound with a degree of unsaturation greater than or equal to 3 of this

composition, it is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery. In addition, the carbonate compound of this composition exhibits good compatibility with the electrolyte solvent, thereby reducing side reactions of the electrolyte and suppressing gas generation in the battery.

As an example, the above alkyl carbonate group with 2 to 10 carbon atoms includes, but is not limited to methyl carbonate, ethyl carbonate, and the like. The alkyl sulfonate group with 1 to 10 carbon atoms includes, but is not limited to methyl sulfonate, ethyl sulfonate, and the like. The fluoroalkyl group with 1 to 10 carbon atoms includes, but is not limited to trifluoromethyl, difluoroethyl, and the like.

In some specific embodiments of the present disclosure, in the compound represented by Formula 3 as described above, $R_5$ and $R_6$ are each an alkyl carbonate group having 1 to 10 carbon atoms, preferably diethyl carbonate groups.

As an example, the carbonate compound includes at least one of the following compounds:

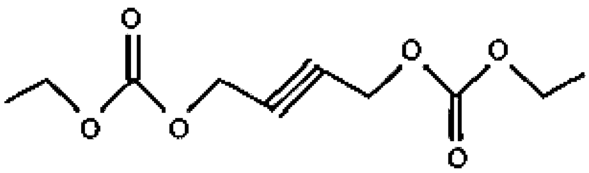

Formula 3-1

or

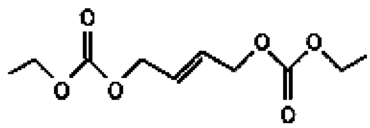

Formula 3-2

.

In some embodiments, the CAS number of Formula 3-1 is 197244-14-7, and the CAS number of Formula 3-2 is 219839-52-8.

In some embodiments of the present disclosure, the sulfonate compound includes a compound represented by Formula 4:

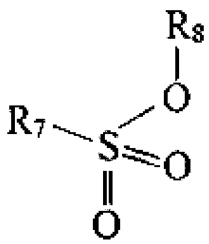

Formula 4

,

in which $R_7$ and $R_8$ are each independently selected from the group consisting of a hydrogen atom, a fluorine atom, alkyl having 1 to 10 carbon atoms, fluoroalkyl having 1 to 10 carbon atoms, alkenyl having 2 to 10 carbon atoms, and alkynyl having 2 to 10 carbon atoms.

Thus, by using the sulfonate compound with a degree of unsaturation greater than or equal to 3 of this composition, it is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film

enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery.

In some specific embodiments of the present disclosure, in Formula 4 as described above, $R_7$ and $R_8$ are each independently selected from the group consisting of methyl, trifluoromethyl, ethynyl, vinyl, and a fluorine atom.

As an example, the sulfonate compound includes at least one of the following compounds:

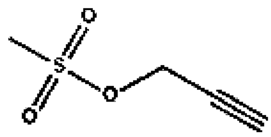

Formula 4-1 ,

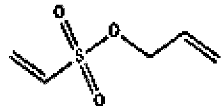

Formula 4-2 ,

or

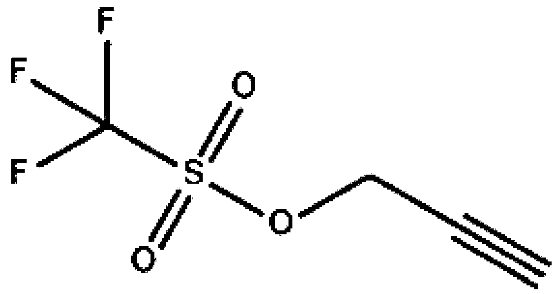

Formula 4-3 .

In some embodiments, the CAS number of Formula 4-1 is 16156-58-4; the CAS number of Formula 4-2 is 7459-72-5; and the CAS number of Formula 4-3 is 41029-46-3.

A second aspect of the present disclosure provides an electrolyte, including the electrolyte additive as described in the first aspect. Therefore, by adding this electrolyte to the lithium-ion battery, the high-temperature cycling performance and the high-temperature storage performance of the battery can be improved.

In some embodiments of the present disclosure, based on a total mass of the electrolyte, a mass proportion of the compound represented by Formula 1 ranges from 0.3% to 4%, such as 0.5%, 1%, 1.5%, 2%, 2.5%, 3%, 3.5%, 4%, or a range composed of any of the above values. Thus, on one hand, such content of the compound represented by Formula 1 can meet the requirement for the SEI film repair process in the later stages of charge-discharge cycling of the battery, thereby improving the stability of the battery in the later stages of cycling. On the other hand, due to the presence of the protective agent in the electrolyte additive, it is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Furthermore, the compound represented by Formula 1, at such content, also participates in the formation of the SEI film, rendering the SEI film enriched in S element. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery.

In some embodiments of the present disclosure, the electrolyte further includes a solvent, and the solvent includes a cyclic solvent. As an example, the cyclic solvent includes at least one of butylene carbonate, ethylene carbonate, fluoroethylene carbonate, propylene carbonate, or 1,4-butyrolactone.

In some embodiments of the present disclosure, based on the total mass of the electrolyte, a mass proportion of the cyclic solvent ranges from 10% to 30%, such as 10%, 15%, 20%, 25%, 30%, or a range composed of any of the above values. Therefore, by adding the cyclic solvent at this content to the electrolyte, the thermal stability of the electrolyte can be improved, and the side reactions of the electrolyte can be reduced.

In some embodiments of the present disclosure, the electrolyte may further include at least one of another solvent of diethyl carbonate, dimethyl carbonate, dipropyl carbonate, ethyl methyl carbonate, methyl propyl carbonate, or ethyl propyl carbonate.

In some embodiments of the present disclosure, the electrolyte may further include an electrolyte salt. The electrolyte salt may include at least one of lithium hexafluorophosphate, lithium tetrafluoroborate, lithium perchlorate, lithium hexafluoroarsenate, lithium difluorosulfonylimide, lithium bis (trifluoromethanesulfonyl) imide, lithium trifluoromethanesulfonate, lithium difluorophosphate, lithium difluorooxalate borate, lithium dioxalate borate, lithium difluorodioxalate phosphate, or lithium tetrafluorooxalate phosphate.

In some embodiments of the present disclosure, the electrolyte may further include an negative electrode film-forming additive, a positive electrode film-forming additive, and additives capable of improving certain performance of the battery, such as an additive for improving overcharge performance of the battery and an additive for improving high-temperature or low-temperature performance of the battery.

It should be noted that the negative electrode film-forming additive, the positive electrode film-forming additive, and the additives capable of improving certain performance of the battery are all types of additives commonly used in the field. Those skilled in the art can select them according to actual needs, and details are omitted here. Moreover, the characteristics and advantages described for the above electrolyte additive are also applicable to this electrolyte, and details are omitted here.

A third aspect of the present disclosure provides a battery. According to the embodiments of the present disclosure, the battery includes the electrolyte as described in the second aspect.

Therefore, during formation and cycling processes of the battery, the compound represented by Formula 1 in the electrolyte additive undergoes a ring-opening reaction to generate the sulfonic ester group-containing free radical. The protective agent in the electrolyte additive has high activity and is capable of preferentially undergoing an addition reaction with the sulfonic ester group-containing free radical generated by the compound represented by Formula 1 over the cyclic solvent in the electrolyte. As a result, catalytic decomposition of the cyclic solvent by the sulfonic ester group-containing free radical is reduced, thereby inhibiting the generation of gases such as ethylene, carbon dioxide, and carbon monoxide from the decomposition of the cyclic solvent at high temperatures. This reduces battery swelling and enhances the high-temperature storage performance of the battery. Meanwhile, after the compound represented by Formula 1 undergoes the ring-opening reaction and the resulting sulfonic ester group-containing free radical undergoes the addition reaction with the protective agent, a compact SEI film enriched in S element is formed on the surface of the negative electrode. In this way, the conductivity of the SEI film and power performance of the battery can be improved. Moreover, the SEI film exhibits high strength, which reduces breakage and reconstruction of the SEI film during high-temperature cycling of the battery, decreases consumption of active lithium, and improves the high-temperature cycling performance of the battery. Therefore, the battery of the present disclosure has excellent high-temperature storage performance and high-temperature cycling performance.

In some embodiments of the present disclosure, the battery further includes a positive electrode active material. The positive electrode active material includes at least one of $LiCoO_2$, $LiMn_2O_4$, $Li_{1+y}Mn_{1-x}M_xO_2$, $LiFe_{1-x}M_xPO_4$, or $Li_2Mn_{1-x}O_4$. M includes at least one of Ni, Co, Mn, Al, Cr, Mg, Zr, Mo, V, or Ti, $0 \leq y \leq 0.2$, and $0 \leq x < 1$.

As an example, in $Li_{1+y}Mn_{1-x}M_xO_2$, $LiFe_{1-x}M_xPO_4$, and $Li_2Mn_{1-x}O_4$, x may be 0, 0.1, 0.3, 0.5, 0.7, 0.9, or a range composed of any of the above values, and y may be 0, 0.1, 0.2, or a range composed of any of the above values. For example, $Li_{1+y}Mn_{1-x}M_xO_2$ may include, but is not limited to $LiMnO_2$, $LiMn_{0.5}Co_{0.3}Ni_{0.2}O_2$, $Li_{1.2}Mn_{0.5}Co_{0.3}Ni_{0.2}O_2$, and the like. $LiFe_{1-x}M_xPO_4$ may include, but is not limited to $LiFePO_4$, $LiFe_{0.8}Mn_{0.2}PO_4$, and the like. $Li_2Mn_{1-x}O_4$ may include, but is not limited to $Li_2MnO_4$ and the like.

In some embodiments of the present disclosure, the positive electrode active material includes at least one of $LiCoO_2$ or $Li_{1+y}Mn_{1-x}M_xO_2$, and M includes at least two of Ni, Co, Mn, Al, Cr, Mg, Zr, Mo, V, or Ti, such as $LiNi_{0.5}Co_{0.3}Mn_{0.2}O_2$, $LiNi_{0.6}Co_{0.2}Mn_{0.2}O_2$, $LiNi_{0.65}Co_{0.25}Mn_{0.1}O_2$, $LiNi_{0.7}Co_{0.2}Mn_{0.1}O_2$, $LiNi_{0.7}Co_{0.2}Al_{0.1}O_2$, and $LiNi_{0.5}Co_{0.3}Al_{0.2}O_2$. In some embodiments, when a ternary active material and lithium cobalt oxide are used as positive electrode active materials for the lithium-ion battery, the lithium-ion battery often exhibits gas generation, swelling and capacity reduction, which become more pronounced under high-temperature conditions. These phenomena are usually caused by aggravated side reactions of the electrolyte. Under high-temperature conditions, problems such as decomposition of the lithium salt, dissolution of transition metal ions, and formation of microcracks in the crystal structure of the positive electrode active material further aggravate side reactions of the electrolyte, eventually resulting in severe gas generation and capacity reduction. However, by adding the electrolyte additive including the compound represented by Formula 1 and the protective agent to the electrolyte of the present disclosure, compact and thermally stable cathode-electrolyte interphase (CEI) and SEI films can be formed at the electrode-electrolyte interfaces. These films effectively suppress side reactions of the electrolyte occurring on the electrode surfaces and prevent the by-products of electrolyte decomposition from corroding the positive electrode active materials. As a result, the dissolution of transition metal ions and the formation of microcracks are inhibited, thereby further reducing electrolyte side reactions. In summary, the electrolyte additive of the present disclosure enhances the stability of positive electrodes composed of ternary active material and lithium cobalt

oxide, thereby inhibiting gas generation and capacity reduction.

Generally, the battery includes a positive electrode sheet, a negative electrode sheet, an electrolyte, and a separator. During charging and discharging of the battery, active ions are intercalated and deintercalated back and forth between the positive electrode sheet and the negative electrode sheet. The electrolyte plays a role in conducting active ions between the positive electrode sheet and the negative electrode sheet. The separator is disposed between the positive electrode sheet and the negative electrode sheet, and mainly plays a role in preventing short-circuiting between the positive electrode and the negative electrode, while making active ions pass through.

The positive electrode sheet includes a positive electrode current collector and a positive electrode active material layer formed on at least one side surface of the positive electrode current collector. The positive electrode active material layer includes the above positive electrode active material.

In some embodiments of the present disclosure, the positive electrode current collector may include a metal foil or a composite positive electrode current collector. For example, an aluminum foil may be used as the metal foil. The composite positive electrode current collector may include a high molecular material substrate layer and a metal layer formed on at least one side surface of the high molecular material substrate layer. For example, the composite current collector may be formed by forming a metal material (aluminum, aluminum alloy, nickel, nickel alloy, and the like) on a high molecular material substrate (such as polypropylene (PP), polyethylene terephthalate (PET), and polybutylene terephthalate (PBT)).

In some embodiments of the present disclosure, the positive electrode active material layer may further optionally include a conductive agent. As an example, the conductive agent may include at least one of superconducting carbon, acetylene black, carbon black, Ketjen black, a carbon dot, a carbon nanotube, graphene, or carbon nanofiber.

In some embodiments of the present disclosure, the positive electrode active material layer may further optionally include a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorine-containing acrylate resin.

In some embodiments of the present disclosure, the positive electrode sheet may be prepared by: dispersing the above components for preparing the positive electrode sheet, for example, the positive electrode active material, the conductive agent, and the binder, in a solvent (for example, N-methyl pyrrolidone) to form a positive electrode slurry; and coating the positive electrode slurry on a positive electrode current collector, followed by drying, cold pressing and other procedures, to obtain the positive electrode sheet.

The negative electrode sheet includes a negative electrode current collector and a negative electrode active material layer formed on at least one side surface of the negative electrode current collector. The negative electrode active material layer includes a negative electrode active material.

In some embodiments of the present disclosure, the negative electrode current collector may be a metal foil or a composite current collector. For example, a copper foil may be used as the metal foil. The composite current collector may include a high molecular material substrate layer and a metal layer formed on at least one surface of a high molecular material substrate. The composite current collector may be formed by forming a metal material (copper, copper alloy, nickel, nickel alloy, and the like) on a substrate of a high molecular material (such as a substrate of polypropylene (PP), polyethylene terephthalate (PET), and polybutylene terephthalate (PBT)).

In some embodiments, the negative electrode active material may be a negative electrode active material known in the art for the battery. As an example, the negative electrode active material may include at least one of graphite, soft carbon, hard carbon, a silicon-based material, a tin-based material, or lithium titanate. The silicon-based material may include at least one of elemental silicon, a silicon-oxygen compound, a silicon-carbon complex, a silicon-nitrogen complex, or a silicon alloy. The tin-based material may include at least one of elemental tin, a tin oxide compound, or a tin alloy.

In some embodiments of the present disclosure, the negative electrode active material layer may further optionally include a binder. The binder may include at least one of styrene butadiene rubber (SBR), polyacrylic acid (PAA), sodium polyacrylate (PAAS), polyacrylamide (PAM), polyvinyl alcohol (PVA), sodium alginate (SA), polymethylmethacrylic acid (PMAA), or carboxymethyl chitosan (CMCS).

In some embodiments of the present disclosure, the negative electrode active material layer may further optionally include a conductive agent. The conductive agent may include at least one of superconducting carbon, acetylene black, carbon black, Ketjen black, a carbon dot, a carbon nanotube, graphene, or carbon nanofiber.

In some embodiments of the present disclosure, the negative electrode active material layer may further optionally include other additives, such as a thickener (such as sodium carboxymethylcellulose (CMC-Na)) and the like.

In some embodiments of the present disclosure, the negative electrode sheet may be prepared by: dispersing the above components used for preparing the negative electrode sheet, for example, the negative electrode active material, the conductive agent, the binder, and any other components, in a solvent (such as deionized water) to form a negative electrode slurry; and coating the negative electrode slurry on a negative electrode current collector, followed by drying, cold pressing, and other procedures, to obtain the negative electrode sheet.

The type of the separator is not particularly limited in the present disclosure. Any well-known separator with a porous structure having good chemical stability and mechanical stability may be selected.

In some embodiments of the present disclosure, the material of the separator may include at least one of glass fiber, non-woven cloth, polyethylene, polypropylene, or polyvinylidene fluoride.

It should be noted that the characteristics and advantages described above for the electrolyte are also applicable to this battery, and details are omitted here.

A fourth aspect of the present disclosure provides an electrical device, including the battery as described in the third aspect. Therefore, the electrical device has an excellent service life. For example, the electrical device may include, but is not limited to, a mobile phone, a laptop computer, a pure electric vehicle, a hybrid electric vehicle, and the like.

It should be noted that the characteristics and advantages described above for the battery are also applicable to this electrical device, and details are omitted here.

The embodiments of the present disclosure are described in detail below. It should be noted that the embodiments described below are illustrative only, and are intended to explain, rather than limiting, the present disclosure. In addition, unless explicitly stated otherwise, all reagents used in the following embodiments are commercially available or can be synthesized according to the methods herein or known methods. For unlisted reaction conditions, they are also easily available by those skilled in the art.

**Example 1**

1. Preparation of positive electrode sheet

A positive electrode active material $LiNi_{0.8}Co_{0.1}Mn_{0.1}O_2$, a conductive agent (conductive carbon black), and a binder (polyvinylidene fluoride, PVDF) were mixed in a mass ratio of 96.8:2:1.2 and added to N-methylpyrrolidone (NMP) to form a positive electrode slurry (with a solid content of 68 wt% in the positive electrode slurry). The positive electrode slurry was coated on upper and lower surfaces of an aluminum foil, dried, and cold-pressed, followed by edge trimming, sheet cutting, and slitting, to obtain the positive electrode sheet.

2. Preparation of negative electrode sheet

Graphite, a conductive agent (conductive carbon black), a thickener (carboxymethyl cellulose, CMC), and a binder (styrene-butadiene rubber, SBR) were mixed in a mass ratio of 95:1.5:2:1.5 and dispersed in deionized water to form a negative electrode slurry (with a solid content of 49 wt% in the negative electrode slurry). The negative electrode slurry was coated on upper and lower surfaces of a copper foil and dried, followed by cold pressing, edge trimming, sheet cutting, and slitting, to obtain the negative electrode sheet.

3. Preparation of electrolyte

In an argon-filled glove box, an electrolyte additive containing a protective agent represented by Formula 2-1 and a compound represented by Formula 1 was added to an organic solvent. The organic solvent included ethylene carbonate, ethyl methyl carbonate, and diethyl carbonate. Based on the total mass of the electrolyte, the mass proportion of the ethylene carbonate was 30%, the mass proportion of the ethyl methyl carbonate was 43.75%, and the mass proportion of the diethyl carbonate was 13.75%. After thorough mixing, $LiPF_6$ was slowly added. After the lithium salt was completely dissolved, an electrolyte with a lithium salt concentration of 1 mol/L was obtained.

4. Separator

A polyethylene film of 16 $\mu$m was used as the separator.

5. Preparation of lithium-ion battery

The positive electrode sheet, the separator, and the negative electrode sheet were stacked in sequence, with the separator positioned between the positive electrode sheet and the negative electrode sheet to isolate the positive electrode sheet from the negative electrode sheet. The stacked assembly was wound to form a bare cell, and tabs were welded onto it. The bare cell was then placed into an external package, and the electrolyte prepared above was injected into the dried cell. Processes including sealing, standing, formation, shaping, and the like were performed to complete the preparation of the lithium-ion battery.

In Examples 2 to 28 and Comparative Examples 1 to 17, the lithium-ion battery was prepared in the same manner as Example 1, except that the composition of the electrolyte additive and solvent system was varied as shown in Table 1. In

Examples 29 and Comparative Examples 15 to 17, the lithium-ion battery was also prepared in the same manner as Example 1, except that $LiCoO_2$ was used as the positive electrode active material.

Table 1

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Example 1 | 2 | Formula 2-1 | 0.4 | 5:1 | Ethylene carbonate | 30 | Ethyl methyl carbonate + diethyl carbonate | 41.35+13.75 | 12.5 |
| Example 2 | 2 | Formula 2-2 | 0.4 | 5:1 | Ethylene carbonate | 30 | Ethyl methyl carbonate + diethyl carbonate | 41.35+13.75 | 12.5 |
| Example 3 | 2 | Formula 2-3 | 0.4 | 5:1 | Ethylene carbonate | 30 | Ethyl methyl carbonate + diethyl carbonate | 41.35+13.75 | 12.5 |
| Example 4 | 2 | Formula 2-4 | 0.4 | 5:1 | Ethylene carbonate | 30 | Ethyl methyl carbonate + diethyl carbonate | 41.35+13.75 | 12.5 |
| Example 5 | 2 | Formula 2-5 | 0.4 | 5:1 | Ethylene carbonate | 30 | Ethyl methyl carbonate + diethyl carbonate | 41.35+13.75 | 12.5 |
| Example 6 | 2 | Formula 3-1 | 0.4 | 5:1 | Ethylene carbonate | 30 | Ethyl methyl carbonate + diethyl carbonate | 41.35+13.75 | 12.5 |

(continued)

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Example 7 | 2 | Formula 3-2 | 0.4 | 5:1 | Ethylene carbonate | 30 | Ethyl methyl carbonate + diethyl carbonate | 41.35+13.75 | 12.5 |
| Example 8 | 2 | Formula 4-1 | 0.4 | 5:1 | Ethylene carbonate | 30 | Ethyl methyl carbonate + diethyl carbonate | 41.35+13.75 | 12.5 |
| Example 9 | 2 | Formula 4-2 | 0.4 | 5:1 | Ethylene carbonate | 30 | Ethyl methyl carbonate + diethyl carbonate | 41.35+13.75 | 12.5 |
| Example 10 | 2 | Formula 4-3 | 0.4 | 5:1 | Ethylene carbonate | 30 | Ethyl methyl carbonate + diethyl carbonate | 41.35+13.75 | 12.5 |
| Example 11 | 0.3 | Formula 2-1 | 0.4 | 0.75:1 | Ethylene carbonate | 30 | Ethyl methyl carbonate + diethyl carbonate | 43.05+13.75 | 12.5 |
| Example 12 | 0.8 | Formula 2-1 | 0.4 | 2:1 | Ethylene carbonate | 30 | Ethyl methyl carbonate + diethyl carbonate | 42.55+13.75 | 12.5 |

(continued)

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Example 13 | 1 | Formula 2-1 | 0.4 | 2.5:1 | Ethylene carbonate | 30 | Ethyl methyl carbonate + diethyl carbonate | 42.35+13.75 | 12.5 |
| Example 14 | 1.5 | Formula 2-1 | 0.4 | 3.75:1 | Ethylene carbonate | 30 | Ethyl methyl carbonate + diethyl carbonate | 41.85+13.75 | 12.5 |
| Example 15 | 2.5 | Formula 2-1 | 0.4 | 6.25:1 | Ethylene carbonate | 30 | Ethyl methyl carbonate + diethyl carbonate | 40.85+13.75 | 12.5 |
| Example 16 | 3 | Formula 2-1 | 0.4 | 7.5:1 | Ethylene carbonate | 30 | Ethyl methyl carbonate + diethyl carbonate | 40.35+13.75 | 12.5 |
| Example 17 | 3.5 | Formula 2-1 | 0.4 | 8.75:1 | Ethylene carbonate | 30 | Ethyl methyl carbonate + diethyl carbonate | 39.85+13.75 | 12.5 |
| Example 18 | 4 | Formula 2-1 | 0.4 | 10:1 | Ethylene carbonate | 30 | Ethyl methyl carbonate + diethyl carbonate | 39.35+13.75 | 12.5 |

(continued)

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Example 19 | 2 | Formula 4-1 | 2.86 | 0.7:1 | Ethylene carbonate | 30 | Ethyl methyl carbonate + diethyl carbonate | 38.89+13.75 | 12.5 |
| Example 20 | 2 | Formula 4-1 | 2 | 1:1 | Ethylene carbonate | 30 | Ethyl methyl carbonate + diethyl carbonate | 39.75+13.75 | 12.5 |
| Example 21 | 2 | Formula 4-1 | 0.67 | 3:1 | Ethylene carbonate | 30 | Ethyl methyl carbonate + diethyl carbonate | 41.08+13.75 | 12.5 |
| Example 22 | 2 | Formula 4-1 | 0.25 | 8:1 | Ethylene carbonate | 30 | Ethyl methyl carbonate + diethyl carbonate | 41.5+13.75 | 12.5 |
| Example 23 | 2 | Formula 4-1 | 0.2 | 10:1 | Ethylene carbonate | 30 | Ethyl methyl carbonate + diethyl carbonate | 41.55+13.75 | 12.5 |
| Example 24 | 2 | Formula 4-1 | 0.19 | 11:1 | Ethylene carbonate | 30 | Ethyl methyl carbonate + diethyl carbonate | 41.56+13.75 | 12.5 |

(continued)

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Example 25 | 2 | Formula 2-1 | 0.4 | 5:1 | Ethylene carbonate+ fluoroethylen e carbonate | 20+10 | Ethyl methyl carbonate + diethyl carbonate | 41.35+13.75 | 12.5 |
| Example 26 | 2 | Formula 2-1 | 0.4 | 5:1 | Ethylene carbonate+ propylene carbonate | 20+10 | Ethyl methyl carbonate + diethyl carbonate | 41.35+13.75 | 12.5 |
| Example 27 | 2 | Formula 2-1 | 0.4 | 5:1 | Ethylene carbonate | 10 | Ethyl methyl carbonate + diethyl carbonate | 61.35+13.75 | 12.5 |
| Example 28 | 2 | Formula 2-1 | 0.4 | 5:1 | Ethylene carbonate | 20 | Ethyl methyl carbonate + diethyl carbonate | 51.35+13.75 | 12.5 |
| Example 29 | 2 | Formula 2-1 | 0.4 | 5:1 | Ethylene carbonate | 30 | Ethyl methyl carbonate + diethyl carbonate | 41.35+13.75 | 12.5 |
| Comparative Example 1 | / | / | / | / | Ethylene carbonate | 30 | Ethyl methyl carbonate + diethyl carbonate | 43.75+13.75 | 12.5 |

(continued)

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Comparative Example 2 | 2 | / | / | / | Ethylene carbonate | 30 | Ethyl methyl carbonate + diethyl carbonate | 41.75+13.75 | 12.5 |
| Comparative Example 3 | / | Formula 2-1 | 0.4 | / | Ethylene carbonate | 30 | Ethyl methyl carbonate + diethyl carbonate | 43.35+13.75 | 12.5 |
| Comparative Example 4 | / | Formula 2-2 | 0.4 | / | Ethylene carbonate | 30 | Ethyl methyl carbonate + diethyl carbonate | 43.35+13.75 | 12.5 |
| Comparative Example 5 | / | Formula 2-3 | 0.4 | / | Ethylene carbonate | 30 | Ethyl methyl carbonate + diethyl carbonate | 43.35+13.75 | 12.5 |
| Comparative Example 6 | / | Formula 2-4 | 0.4 | / | Ethylene carbonate | 30 | Ethyl methyl carbonate + diethyl carbonate | 43.35+13.75 | 12.5 |
| Comparative Example 7 | / | Formula 2-5 | 0.4 | / | Ethylene carbonate | 30 | Ethyl methyl carbonate + diethyl carbonate | 43.35+13.75 | 12.5 |

(continued)

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Comparative Example 8 | / | Formula 3-1 | 0.4 | / | Ethylene carbonate | 30 | Ethyl methyl carbonate + diethyl carbonate | 43.35+13.75 | 12.5 |
| Comparative Example 9 | / | Formula 3-2 | 0.4 | / | Ethylene carbonate | 30 | Ethyl methyl carbonate + diethyl carbonate | 43.35+13.75 | 12.5 |
| Comparative Example 10 | / | Formula 4-1 | 0.4 | / | Ethylene carbonate | 30 | Ethyl methyl carbonate + diethyl carbonate | 43.35+13.75 | 12.5 |
| Comparative Example 11 | / | Formula 4-2 | 0.4 | / | Ethylene carbonate | 30 | Ethyl methyl carbonate + diethyl carbonate | 43.35+13.75 | 12.5 |
| Comparative Example 12 | / | Formula 4-3 | 0.4 | / | Ethylene carbonate | 30 | Ethyl methyl carbonate + diethyl carbonate | 43.35+13.75 | 12.5 |
| Comparative Example 13 | 2 | Vinylene carbonate | 0.4 | 5:1 | Ethylene carbonate | 30 | Ethyl methyl carbonate + diethyl carbonate | 41.35+13.75 | 12.5 |

(continued)

| | Electrolyte additive | | | | Solvent | | | | Electrolyte |
|---|---|---|---|---|---|---|---|---|---|
| | Compound represented by Formula 1 | Protective agent | | Mass ratio of the compound represented by Formula 1 to the protective agent | Cyclic solvent | | Other solvents | | Addition amount in the electrolyte, wt% |
| | Addition amount in the electrolyte, wt% | Composition | Addition amount in the electrolyte, wt% | | Composition | Addition amount in the electrolyte, wt% | Composition | Addition amount in the electrolyte, wt% | |
| Comparative Example 14 | 2 | 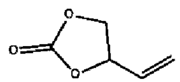 | 0.4 | 5:1 | Ethylene carbonate | 30 | Ethyl methyl carbonate + diethyl carbonate | 41.35+13.75 | 12.5 |
| Comparative Example 15 | / | / | / | / | Ethylene carbonate | 30 | Ethyl methyl carbonate + diethyl carbonate | 43.75+13.75 | 12.5 |
| Comparative Example 16 | 2 | / | / | / | Ethylene carbonate | 30 | Ethyl methyl carbonate + diethyl carbonate | 41.75+13.75 | 12.5 |
| Comparative Example 17 | / | Formula 2-1 | 0.4 | / | Ethylene carbonate | 30 | Ethyl methyl carbonate + diethyl carbonate | 43.35+13.75 | 12.5 |

Note: In the above Table 1, the expression "the composition being A+B, and the addition amount in electrolyte being a+b" can be understood as "the composition being a mixture of A and B, in which the proportion of A is correspondingly a% and the proportion of B is correspondingly b%".

The power performance, cycling performance, and high-temperature storage performance of the lithium-ion batteries obtained in Examples 1 to 29 and Comparative Examples 1-17 were characterized. The characterization results are shown in Table 2.

A test method for the cycling performance and the power performance of the lithium-ion battery is described below.

The battery was charged at a constant current of 1.0 C to 4.4 V at 45°C, then charged at a constant voltage until a cut-off current of 0.05 C. After that, the battery was discharged at a constant current of 1.0 C, and the discharge capacity was recorded as $C_0$. The charge-discharge cycle was repeated until the capacity decayed to 80% of $C_0$, and the number of cycles was recorded.

The battery that had undergone the above high-temperature cycling until its capacity dropped to 80% of $C_0$ was taken, charged at 1 C to 4.4 V, then charged at a constant voltage until a current of 0.05C. The battery was left to stand for 30 minutes, then discharged at 1 C for 0.5 hours and left to stand for another 30 minutes. The voltage after the standing was recorded as $V_1$. Subsequently, the battery was discharged at 2 C for 10 seconds with a sampling interval of 0.1 seconds, and the voltage at the end of discharge was recorded as $V_2$. Direct-current internal resistance (DCR) of the battery was calculated using the formula: $DCR=(V_1-V_2)/I$, where I=2C.

A test method for the high-temperature storage performance of the lithium-ion battery is described below.

The battery was charged at a constant current of 1.0 C to 4.4 V at 25°C, then charged at a constant voltage of 4.4V until a cut-off current of 0.05 C. After that, the battery was discharged at a constant current of 0.5 C, and the discharge capacity was recorded as $C_1$. The battery was removed, and its initial thickness was measured as $T_1$ using a thickness tester. At 25°C, the battery was charged at a constant current of 1.0 C to 4.4 V, then charged at a constant voltage of 4.4V until a cut-off current of 0.05 C. The battery was then transferred to a 60°C environment and left to stand for 15 days, and its thickness after standing for 15 days was measured as $T_2$ using the thickness tester. Subsequently, the battery was discharged at a constant current of 1.0 C, and the discharge capacity was recorded as $C_2$. The capacity retention ratio after storage at 60°C for 15 days was equal to $C_2/C_1*100\%$, and the battery swelling rate was equal to $100\%*(T_2-T_1)/T_1$.

Table 2

| | DCR after cycling (mhom) | Capacity retention rate after storage at 60°C for 15 days (%) | Battery swelling rate after storage at 60°C for 15 days (%) | Number of cycles until capacity reduction to 80% of $C_0$ |
|---|---|---|---|---|
| Example 1 | 65.97 | 92.11 | 8.59 | 428 |
| Example 2 | 67.14 | 91.99 | 9.55 | 401 |
| Example 3 | 63.85 | 95.14 | 8.20 | 461 |
| Example 4 | 65.14 | 91.67 | 8.26 | 433 |
| Example 5 | 70.68 | 88.55 | 10.07 | 382 |
| Example 6 | 64.14 | 90.11 | 8.4 | 458 |
| Example 7 | 65.69 | 88.89 | 10.98 | 439 |
| Example 8 | 63.39 | 94.22 | 6.39 | 557 |
| Example 9 | 64.27 | 93.47 | 6.92 | 462 |
| Example 10 | 66.14 | 88.27 | 7.47 | 421 |
| Example 11 | 74.58 | 87.12 | 7.23 | 335 |
| Example 12 | 72.47 | 89.01 | 7.51 | 349 |
| Example 13 | 71.02 | 90.12 | 8.12 | 352 |
| Example 14 | 69.78 | 91.98 | 8.5 | 366 |
| Example 15 | 63.51 | 93.32 | 9.03 | 467 |
| Example 16 | 62.28 | 93.46 | 9.21 | 526 |
| Example 17 | 60.11 | 94.17 | 9.32 | 549 |
| Example 18 | 59.05 | 95.51 | 9.69 | 632 |
| Example 19 | 67.68 | 97.13 | 3.23 | 399 |

(continued)

| | DCR after cycling (mhom) | Capacity retention rate after storage at 60°C for 15 days (%) | Battery swelling rate after storage at 60°C for 15 days (%) | Number of cycles until capacity reduction to 80% of $C_0$ |
|---|---|---|---|---|
| Example 20 | 65.31 | 96.53 | 4.61 | 442 |
| Example 21 | 64.17 | 94.92 | 5.12 | 529 |
| Example 22 | 61.36 | 92.13 | 7.02 | 651 |
| Example 23 | 59.21 | 91.34 | 7.26 | 653 |
| Example 24 | 59.29 | 90.95 | 7.2 | 667 |
| Example 25 | 68.77 | 92.14 | 6.34 | 459 |
| Example 26 | 63.82 | 90.57 | 7.45 | 451 |
| Example 27 | 59.14 | 89.54 | 5.14 | 386 |
| Example 28 | 61.64 | 90.47 | 6.24 | 401 |
| Example 29 | 72.34 | 88.37 | 12.94 | 399 |
| Comparative Example 1 | 80.08 | 79.68 | 20.65 | 138 |
| Comparative Example 2 | 75.17 | 71.78 | 26.49 | 146 |
| Comparative Example 3 | 84.91 | 86.44 | 7.05 | 110 |
| Comparative Example 4 | 84.33 | 90.15 | 5.87 | 114 |
| Comparative Example 5 | 90.31 | 86.01 | 8.15 | 84 |
| Comparative Example 6 | 85.72 | 86.36 | 7.98 | 107 |
| Comparative Example 7 | 82.34 | 88.64 | 6.98 | 121 |
| Comparative Example 8 | 84.93 | 87.15 | 8.11 | 110 |
| Comparative Example 9 | 82.86 | 85.69 | 9.02 | 120 |
| Comparative Example 10 | 70.87 | 89.47 | 3.05 | 328 |
| Comparative Example 11 | 71.48 | 86.47 | 5.98 | 288 |
| Comparative Example 12 | 72.99 | 85.47 | 7.18 | 228 |
| Comparative Example 13 | 67.44 | 85.98 | 15.5 | 375 |
| Comparative Example 14 | 70.68 | 80.91 | 17.6 | 305 |
| Comparative Example 15 | 78.34 | 67.34 | 34.56 | 101 |
| Comparative Example 16 | 86.21 | 60.89 | 50.37 | 124 |
| Comparative Example 17 | 85.44 | 81.39 | 10.39 | 103 |

Conclusions: It can be seen from the data in Table 2 that, compared with Comparative Examples 1 to 2, each of the lithium-ion batteries in Examples 1 to 29 exhibits a significantly lower DCR after cycling and swelling rate. Moreover, the capacity retention rates after storage at 60°C and the cycling performance of the lithium-ion batteries in Examples 1 to 29 indicate that in the present disclosure, by adding the electrolyte additive containing the compound represented by Formula 1 and the chain compound with a degree of unsaturation greater than or equal to 3 to the electrolyte, the power performance, the high-temperature storage performance, and the cycling performance of lithium-ion batteries can be improved.

Compared with Comparative Example 3, Example 1; Comparative Example 4, Example 2; Comparative Example 5, Example 3; Comparative Example 6, Example 4; Comparative Example 7, Example 5; Comparative Example 8, Example 6; Comparative Example 9, Example 7; Comparative Example 10, Example 8; Comparative Example 11, Example 9; and Comparative Example 12, Example 10, the lithium-ion batteries of Examples 1 to 10 exhibit lower DCR values after cycling, higher capacity retention after storage at 60°C, improved cycling performance, and higher swelling rates. This is because the electrolyte additive of Examples 1 to 10 contains the compound represented by Formula 1, which

causes gas generation in the electrolyte and thus increases the swelling rate of the battery. However, the SEI film formed thereby has higher ionic conductivity and compactness, thereby reducing the DCR and improving the capacity retention after storage at 60°C and the cycling performance. When Examples 1 to 10 are compared with Comparative Example 13, the lithium battery of Example 5 shows a higher DCR. This is because the degree of unsaturation of the protective agent used in Example 5 is 3, resulting in a lower degree of copolymerization with the compound of Formula 1, and therefore a lower S content in the formed SEI film, which leads to a higher DCR. Nevertheless, the lithium batteries of Examples 1 to 10 exhibit higher capacity retention after storage at 60°C and improved cycling performance, as well as a lower swelling rate. This is because the protective agent employed in Examples 1 to 10 is a linear compound, which facilitates film formation and improves the thermal stability of the SEI film, thereby reducing the DCR and swelling rate after cycling and enhancing the capacity retention after storage at 60°C and the cycling performance of the lithium battery.

When Examples 1 to 10 are compared with Comparative Example 14, the lithium-ion batteries of Examples 1 to 10 exhibit higher capacity retention after storage at 60°C and improved cycling performance, as well as lower swelling rates and DCR values. This is because the protective agent used in Examples 1 to 10 is a linear compound, which facilitates film formation and improves the thermal stability of the SEI film, thereby reducing the DCR and swelling rate after cycling and enhancing the capacity retention after storage at 60°C and the cycling performance of the lithium battery. When Example 29 is compared with Comparative Examples 15 to 17, Example 29 shows higher capacity retention after storage at 60°C and improved cycling performance, as well as lower swelling rate and DCR compared with Comparative Examples 15 and 16. Example 29 also exhibits a lower swelling rate compared with Comparative Example 17. This is because the electrolyte additive of Example 29 contains the compound represented by Formula 1, which causes gas generation in the electrolyte and thus increases the swelling rate of the lithium-ion battery. However, the SEI film formed thereby has higher ionic conductivity and compactness, thereby reducing the DCR and improving the capacity retention after storage at 60°C and the cycling performance.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from scope of the present disclosure.

## Claims

1. An electrolyte additive, comprising a compound represented by Formula 1 and a protective agent,

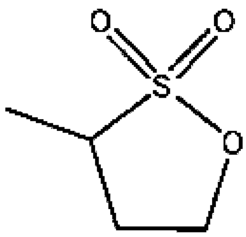

Formula 1 ,

wherein the protective agent comprises a chain compound with a degree of unsaturation greater than or equal to 3 and is capable of undergoing an addition reaction with a sulfonic ester group-containing free radical formed after a ring-opening reaction of the compound represented by Formula 1.

2. The electrolyte additive according to claim 1, wherein the protective agent comprises a chain compound with a degree of unsaturation ranging from 3 to 8.

3. The electrolyte additive according to claim 1 or 2, wherein a mass ratio of the compound represented by Formula 1 to the protective agent ranges from 0.7:1 to 11:1.

4. The electrolyte additive according to claim 1 or 2, wherein the chain compound with a degree of unsaturation greater than or equal to 3 comprises at least one of a silane compound, a carbonate compound, or a sulfonate compound.

5. The electrolyte additive according to claim 4, wherein the silane compound comprises a compound represented by Formula 2,

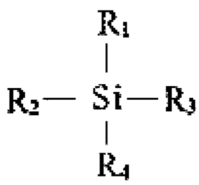

Formula 2 ,

wherein $R_1$, $R_2$, $R_3$, and $R_4$ are each independently selected from the group consisting of hydrogen, fluorine, alkyl having 1 to 10 carbon atoms, silyl having 1 to 10 carbon atoms, siloxy having 1 to 10 carbon atoms, alkenyl having 2 to 10 carbon atoms, alkynyl having 2 to 10 carbon atoms, alkenylsiloxy having 2 to 10 carbon atoms, and alkynylsiloxy having 2 to 10 carbon atoms.

6. The electrolyte additive according to claim 5, wherein $R_1$, $R_2$, $R_3$, and $R_4$ are each independently selected from the group consisting of methyl, vinyl, ethynyl, ethynyldimethylsiloxy, and trivinylsiloxy.

7. The electrolyte additive according to claim 5 or 6, wherein the silane compound comprises at least one of the following compounds:

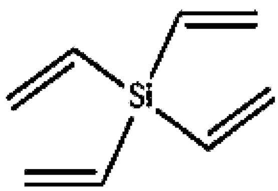

Formula 2-1 ,

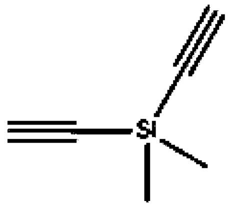

Formula 2-2 ,

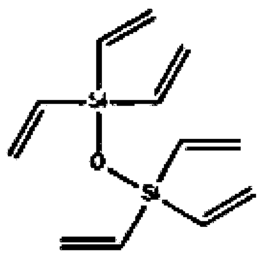

Formula 2-3 ,

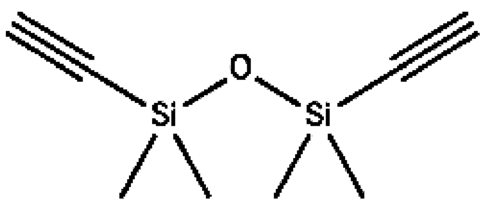

Formula 2-4 , or

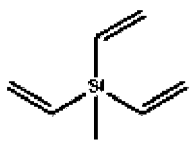

Formula 2-5 .

8. The electrolyte additive according to claim 5, wherein the carbonate compound comprises a compound represented by Formula 3,

$R_5$-A-$R_6$ Formula 3,

wherein:

A is alkenyl having 2 to 6 carbon atoms or alkynyl having 2 to 6 carbon atoms; and $R_5$ and $R_6$ are each independently selected from the group consisting of hydrogen, fluorine, alkyl having 1 to 10 carbon atoms, alkenyl having 2 to 10 carbon atoms, alkynyl having 2 to 10 carbon atoms, an alkyl carbonate group having 2 to 10 carbon atoms, an alkyl sulfonate group having 1 to 10 carbon atoms, and fluoroalkyl having 1 to 10 carbon atoms, provided that at least one of $R_5$ and $R_6$ is an alkyl carbonate group having 2 to 10 carbon atoms.

**9.** The electrolyte additive according to claim 8, wherein $R_5$ and $R_6$ are each an alkyl carbonate group having 1 to 10 carbon atoms.

**10.** The electrolyte additive according to claim 9, wherein $R_5$ and $R_6$ are each a diethyl carbonate group having 1 to 10 carbon atoms.

**11.** The electrolyte additive according to any one of claims 8 to 10, wherein the carbonate compound comprises at least one of the following compounds:

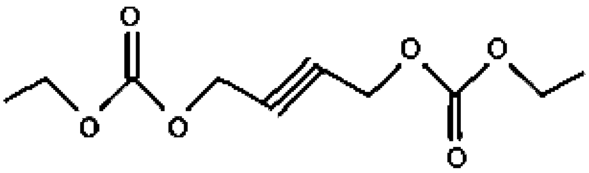

Formula 3-1

or

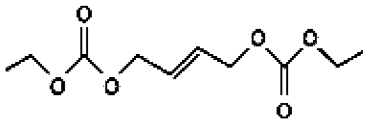

Formula 3-2

.

**12.** The electrolyte additive according to claim 4, wherein the sulfonate compound comprises a compound represented by Formula 4:

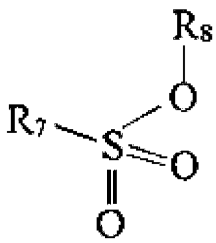

Formula 4

,

wherein $R_7$ and $R_8$ are each independently selected from the group consisting of a hydrogen atom, a fluorine atom, alkyl having 1 to 10 carbon atoms, fluoroalkyl having 1 to 10 carbon atoms, alkenyl having 2 to 10 carbon atoms, and alkynyl having 2 to 10 carbon atoms.

**13.** The electrolyte additive according to claim 12, wherein $R_7$ and $R_8$ are each independently selected from the group consisting of methyl, trifluoromethyl, ethynyl, vinyl, and a fluorine atom.

**14.** The electrolyte additive according to claim 12 or 13, wherein the sulfonate compound comprises at least one of the following compounds:

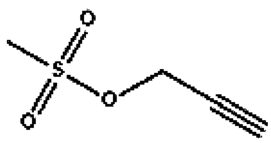

Formula 4-1

,

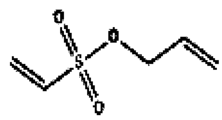

Formula 4-2

,

or

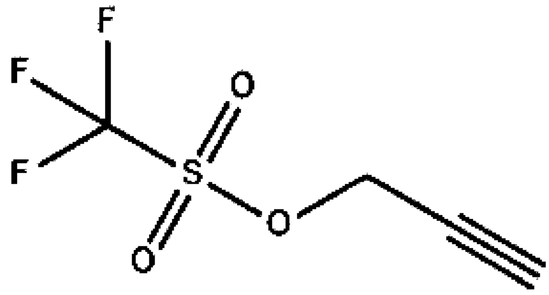

Formula 4-3

.

**15.** An electrolyte, comprising the electrolyte additive according to any one of claims 1 to 14.

**16.** The electrolyte according to claim 15, wherein, based on a total mass of the electrolyte, a mass proportion of the compound represented by Formula 1 ranges from 0.3% to 4%.

**17.** The electrolyte according to claim 16, further comprising a solvent, wherein the solvent comprises a cyclic solvent.

**18.** The electrolyte according to claim 17, wherein the cyclic solvent comprises at least one of butylene carbonate, ethylene carbonate, fluoroethylene carbonate, propylene carbonate, or 1,4-butyrolactone.

**19.** The electrolyte according to claim 18, wherein, based on the total mass of the electrolyte, a mass proportion of the cyclic solvent ranges from 10% to 30%.

**20.** A battery, comprising the electrolyte according to any one of claims 15 to 19.

**21.** The battery according to claim 20, further comprising a positive electrode active material, the positive electrode active material comprises at least one of $LiCoO_2$, $LiMn_2O_4$, $Li_{1+y}Mn_{1-x}M_xO_2$, $LiFe_{1-x}M_xPO_4$, or $Li_2Mn_{1-x}O_4$, wherein:

M comprises at least one of Ni, Co, Mn, Al, Cr, Mg, Zr, Mo, V, or Ti;

$$0 \leq y \leq 0.2;$$

and

$$0 \leq x < 1.$$

**22.** The battery according to claim 21, wherein the positive electrode active material comprises at least one of $LiCoO_2$ or $Li_{1+y}Mn_{1-x}M_xO_2$, wherein M comprises at least two of Ni, Co, Mn, Al, Cr, Mg, Zr, Mo, V, or Ti.

**23.** An electrical device, comprising the battery according to any one of claims 20 to 22.

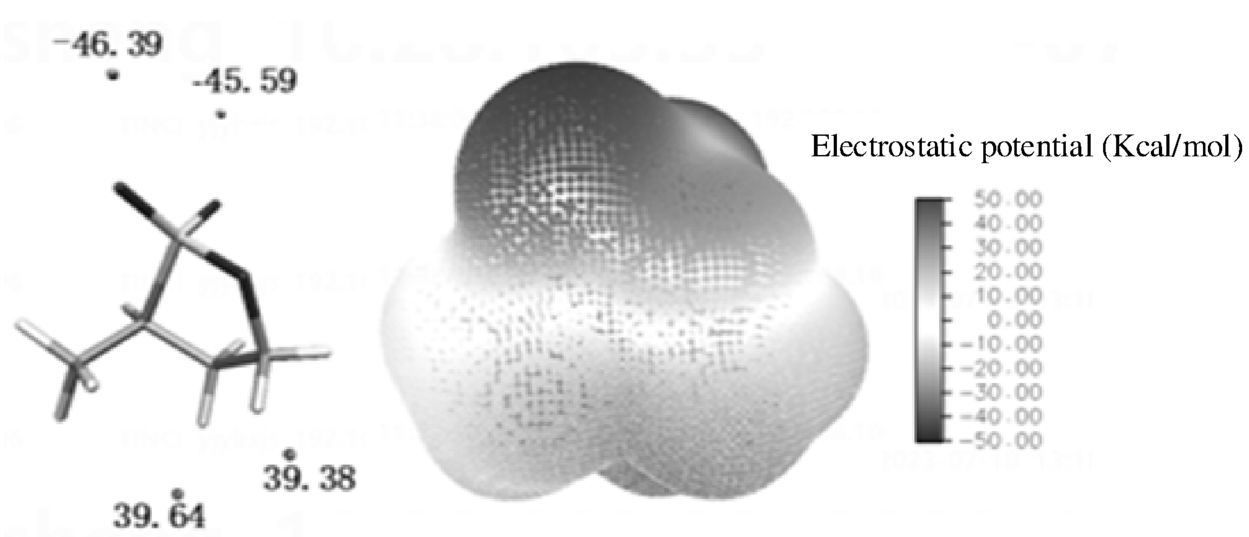
-46.39
-45.59
39.38
39.64
Electrostatic potential (Kcal/mol)
50.00
40.00
30.00
20.00
10.00
0.00
-10.00
-20.00
-30.00
-40.00
-50.00

FIG. 1

**INTERNATIONAL SEARCH REPORT**

International application No. **PCT/CN2024/124101**

**A. CLASSIFICATION OF SUBJECT MATTER**

H01M10/0567(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电解液, 1, 4-丁烷磺酸内酯, 1-甲基-1, 3-丙烷磺酸内酯, 四乙烯硅烷, 碳酸酯, 磺酸酯, electrolyte, 1, 4-butanesultone, 1-methyl-1, 3-propanesultone, tetravinylsilane, carbonate, sulfonate

**C. DOCUMENTS CONSIDERED TO BE RELEVANT**

| Category* | Citation of document, with indication, where appropriate, of the relevant passages | Relevant to claim No. |
|---|---|---|
| PX | CN 117712480 A (GUANGZHOU TINCI MATERIALS TECHNOLOGY CO., LTD. et al.) 15 March 2024 (2024-03-15)<br>description, paragraphs 3-151 | 1-7, 15-23 |
| PX | CN 118448726 A (SUZHOU CHEERCHEM ADVANCED MATERIAL CO., LTD.) 06 August 2024 (2024-08-06)<br>description, paragraphs 5-81 | 1-4, 12-23 |
| X | CN 115719832 A (GUANGZHOU TINCI MATERIALS TECHNOLOGY CO., LTD.) 28 February 2023 (2023-02-28)<br>description, paragraphs 14-98 | 1-23 |
| X | CN 115954542 A (JIUJIANG TINCI MATERIALS TECHNOLOGY CO., LTD.) 11 April 2023 (2023-04-11)<br>description, paragraphs 22-61 | 1-23 |
| X | CN 103460495 A (UBE INDUSTRIES, LTD.) 18 December 2013 (2013-12-18)<br>claims 1-14, and description, paragraphs 2 and 71-141 | 1-4, 12-23 |
| A | JP 2001256995 A (DENSO CORP. et al.) 21 September 2001 (2001-09-21)<br>entire document | 1-23 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 January 2025** | **24 January 2025** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2024/124101**

| Patent document cited in search report | | | Publication date (day/month/year) | Patent family member(s) | | | Publication date (day/month/year) |
|---|---|---|---|---|---|---|---|
| CN | 117712480 | A | 15 March 2024 | None | | | |
| CN | 118448726 | A | 06 August 2024 | None | | | |
| CN | 115719832 | A | 28 February 2023 | None | | | |
| CN | 115954542 | A | 11 April 2023 | WO | 2024114166 | A1 | 06 June 2024 |
| CN | 103460495 | A | 18 December 2013 | US | 2014030610 | A1 | 30 January 2014 |
| | | | | US | 9384906 | B2 | 05 July 2016 |
| | | | | RU | 2013145681 | A | 20 May 2015 |
| | | | | KR | 20140022832 | A | 25 February 2014 |
| | | | | EP | 2698859 | A1 | 19 February 2014 |
| | | | | EP | 2698859 | B1 | 27 July 2016 |
| | | | | WO | 2012141270 | A1 | 18 October 2012 |
| | | | | JP | 6032200 | B2 | 24 November 2016 |
| | | | | CA | 2832881 | A1 | 18 October 2012 |
| | | | | JP | 2013145749 | A | 25 July 2013 |
| | | | | JP | 5354118 | B2 | 27 November 2013 |
| | | | | BR | 112013026067 | A2 | 24 September 2019 |
| | | | | JP | WO2012141270 | A1 | 28 July 2014 |
| | | | | CN | 103460495 | B | 27 January 2016 |
| | | | | IN | 201308020 | P4 | 29 August 2014 |
| JP | 2001256995 | A | 21 September 2001 | JP | 4093699 | B2 | 04 June 2008 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311341961

### Non-patent literature cited in the description

- *CHEMICAL ABSTRACTS*, 1112-55-6
- *CHEMICAL ABSTRACTS*, 1675-60-1
- *CHEMICAL ABSTRACTS*, 75144-60-4
- *CHEMICAL ABSTRACTS*, 4180-02-3
- *CHEMICAL ABSTRACTS*, 18244-95-6
- *CHEMICAL ABSTRACTS*, 197244-14-7
- *CHEMICAL ABSTRACTS*, 219839-52-8
- *CHEMICAL ABSTRACTS*, 16156-58-4
- *CHEMICAL ABSTRACTS*, 7459-72-5
- *CHEMICAL ABSTRACTS*, 41029-46-3